# EUROPÄISCHE PATENTSCHRIFT

(11) **EP 3 489 062 B1**
(45) Veröffentlichungstag und Bekanntmachung des Hinweises auf die Patenterteilung: **03.06.2020**
(21) Anmeldenummer: 17203332.6
(22) Anmeldetag: 23.11.2017
(51) Int. Cl.: B60K 15/00

(54) **TANKSYSTEM FÜR EIN NIEDERFLUR-FAHRZEUG**
TANK SYSTEM FOR A LOW-PLATFORM RAILWAY TRUCK
SYSTÈME DE RÉSERVOIR POUR UN VÉHICULE

(43) Veröffentlichungstag der Anmeldung: 29.05.2019
(73) Patentinhaber: Salzburger Aluminium Aktiengesellschaft, 5651 Lend (AT)
(72) Erfinder: Rasser, Christian, 5660 Taxenbach (AT); Berger, Simon, 6391 Fieberbrunn (AT); Eder, Christian, 5452 Pfarrwerfen (AT)
(74) Vertreter: Weiser & Voith Patentanwälte Partnerschaft

(56) Entgegenhaltungen:
- EP-A1- 0 597 768
- EP-A1- 3 236 132
- EP-A1- 3 236 133
- US-A- 6 125 637

## Beschreibung

Die vorliegende Erfindung betrifft ein Tanksystem für ein Niederflur-Fahrzeug, insbesondere einen Bus, mit zumindest einem Tank zur Aufnahme von Kryofluiden wie verflüssigtem Wasserstoff oder Erdgas (Liquefied Natural Gas, LNG).

Bei Tanksystemen dieser Art liegt das Kryofluid im Tank unter Tiefsttemperaturbedingungen von bis zu -130 °C und Drücken von bis zu 20 - 25 bar in Form eines Zweiphasengemischs aus Kryogas und Kryoflüssigkeit vor, und der Tank ist entsprechend temperaturisoliert und druckfest. Das Kryofluid wird nach der Entnahme aus dem Tank in einem Heizelement verdampft und im gasförmigen Zustand dem Verbrennungsmotor des Fahrzeugs als Brennstoff zugeführt, siehe z.B. EP3236133 A1.

Die Handhabung und Speicherung solcher Kryofluide ist ein sicherheitskritischer Aspekt des Fahrzeugs. Tanksysteme für Kryofluide unterliegen daher zahlreichen Sicherheitsanforderungen, welche beispielsweise im europäischen Raum in der Richtline ECE R110 definiert sind. Eine der Sicherheitsmaßnahmen besteht darin, ein Überdruckventil bei dem Tank vorzusehen, das vor, während und auch regelmäßig nach dem Tankvorgang einer Sichtprüfung auf Auslösung unterzogen werden kann. Das Überdruckventil muss für den Benutzer, z.B. den Fahrer, Tankwart oder Rettungspersonal, zur Überprüfung gut zugänglich sein. Während dies bei Lastkraftwagen, bei welchen die Kryotanks unter dem Ladeboden oder hinter der Fahrerkabine angeordnet werden können, kein Problem ist, stellt dies für Niederflur-Fahrzeuge eine signifikante Nutzungseinschränkung dar: Denn hier soll gerade der leicht erreichbare Niederflurbereich des Fahrzeugs für das Ein- und Ausladen bzw. Ein- und Aussteigen maximiert werden. Der Einbau eines Tanksystems in diesem gut zugänglichen Fahrzeugbereich, beispielsweise hinter der letzten Sitzreihe in einem Bus, vergeudet kostbaren Lade- und Sitzraum.

Die Erfindung setzt sich zum Ziel, die Nachteile des bekannten Standes der Technik zu überwinden und ein Tanksystem für Niederflur-Fahrzeuge zu schaffen, welches den Beförderungsraum des Niederflur-Fahrzeugs maximiert und dabei die hohen Sicherheitsanforderungen bei der Handhabung von Kryofluiden erfüllt.

Diese Ziel wird mit einem Tanksystem der einleitend genannten Art erreicht, welches sich gemäß der Erfindung auszeichnet durch
eine am Dach des Fahrzeugs montierbare Speichereinheit umfassend den zumindest einen Tank und ein ihn umhüllendes oder daran angrenzendes Schutzgehäuse, in dem eine an den Tank angeschlossene Ventilbaugruppe aufgenommen ist, und
eine im oder am Fahrzeug in Reichweite einer darin befindlichen oder daneben stehenden Person montierbare Bedieneinheit, welche über einen Leitungsstrang mit der Speichereinheit verbunden ist,
wobei die Ventilbaugruppe ein an eine vom Kopfraum des Tanks ausgehende Füll- oder Entgasungsleitung angeschaltetes Überdruckventil aufweist, welches mit einem seine Überdruckauslösung detektierenden Sensor ausgestattet ist, der eine in der Bedieneinheit angeordnete Anzeigeeinrichtung steuert.

Durch die erfindungsgemäße Zweiteilung des Tanksystems kann der kostbare bodennahe Beförderungsbereich von Niederflur-Fahrzeugen maximiert werden, ohne die Sicherheitsfunktionalität des Tanksystems zu beeinträchtigen. Die voluminöse Speichereinheit mit den Kryotanks kann am Dach angeordnet werden und verbraucht dadurch keinen Niederflur-Bauraum, lediglich die verhältnismäßig kleine Bedieneinheit muss in diesem Bereich angeordnet werden. Das sicherheitskritische Überdruckventil ist dabei - mechanisch geschützt vom Schutzgehäuse - direkt am Kryotank angeordnet, während seine Überprüfung an der im Niederflur-Bauraum befindlichen Warneinrichtung der Bedieneinheit einfach vorgenommen werden kann.

Bevorzugt weist das Überdruckventil eine bei seiner Überdruckauslösung absprengende Kappe auf, wobei der Sensor dafür ausgebildet ist, ein Fehlen der Kappe zu detektieren. Dadurch ist die Auslösung des Überdruckventils irreversibel, so dass Manipulationen verhindert werden.

Besonders günstig ist es, wenn in die Bedieneinheit gleich alle zum Betanken erforderlichen Komponenten integriert sind, insbesondere ein Befüllanschluss, welcher über eine im Leitungsstrang geführte Füllleitung an den Tank angeschlossen ist. Die Bedieneinheit kann damit gleichsam als "One-Stop-Shop"-Modul für alle beim Betankungsvorgang erforderlichen Funktionen ausgeführt werden, das im gut zugänglichen Niederflurraum des Fahrzeugs dem Bediener zur Verfügung steht.

Alternativ kann die Bedieneinheit zweigeteilt werden, und zwar in einen an der Seite des Fahrzeugs montierbaren ersten Bedienteil, der zumindest den Befüllanschluss enthält, und einen davon gesondert im Führerstand des Fahrzeugs montierbaren zweiten Bedienteil, der zumindest die Anzeigeeinrichtung enthält. Die Sichtprüfung der Auslösung des Überdruckventils kann dadurch auch vom Fahrer direkt im Führerstand vorgenommen werden. In dieser Ausführungsform kann optional eine weitere Warneinrichtung im ersten Bedienteil angeordnet werden, welche vom Sensor ebenfalls gesteuert ist, um die Sichtprüfung z.B. beim Tanken auch von außen durchführen zu können.

Als weitere Sicherheitsmaßnahme für Kryo-Tanksysteme wird in der Regel ein Absperrventil für die Entnahmeleitung des Tanks in unmittelbarer Nähe bzw. direkt am Tank angeordnet, um im Notfall, z.B. bei einem Bruch der Entnahmeleitung oder einem Motorbrand, ein unkontrolliertes Austreten von Kryofluid aus dem Tank sofort unterbinden zu können. Gemäß einer bevorzugten Ausführungsform der Erfindung wird diese Absperrventilfunktion zweigeteilt: Die Ventilbaugruppe weist ein in eine vom Bodenraum des Tanks ausgehende Entnahmeleitung eingeschaltetes Absperrventil auf, welches von einem in der Bedieneinheit angeordneten Notabschalter aus elektrisch betätigbar ist. Das sicherheitskritische Absperrventil ist so - mechanisch geschützt vom Schutzgehäuse - direkt am Kryotank angeordnet, während seine Betätigung über die im Niederflur-Bauraum befindliche Bedieneinheit für den Notfall sofort zugänglich ist.

Wenn die Bedieneinheit in einen ersten und einen zweiten Bedienteil unterteilt ist, ist der Notabschalter bevorzugt im zweiten, im Führerstand des Fahrzeugs montierbaren Bedienteil angeordnet. Zusätzlich kann auch der erste Bedienteil einen Notabschalter enthalten, von welchem aus das Absperrventil ebenfalls elektrisch betätigbar ist, so dass die Notabschaltung des Absperrventils auch beim Tankvorgang bzw. von außen vorgenommen werden kann.

Für die Betankung von Kryotanks ist eine vorhergehende Entgasung des Tanks günstig, um den Anteil an Kryoflüssigkeit in dem Zweiphasengemisch aus Kryogas und Kryoflüssigkeit zu maximieren. Dazu wird herkömmlicherweise ein manuelles Entgasungsventil eingesetzt, das aus Sicherheitsgründen möglichst nahe bzw. direkt am Tank anzubringen ist. Um die Zugänglichkeit des Entgasungsventils zu gewährleisten und dabei die Sicherheitsanforderungen zu erfüllen, weist die in der Speichereinheit enthaltende Ventilbaugruppe ein in eine vom Kopfraum des Tanks ausgehende Entgasungsleitung eingeschaltetes Entgasungsventil auf, welches von einem in der Bedieneinheit angeordneten Entgasungsschalter aus elektrisch betätigbar ist. Bevorzugt bietet dabei die Bedieneinheit einen Entgasungsanschluss dar, welcher an die im Leitungsstrang geführte Entgasungsleitung angeschlossen ist, was die Bedieneinheit zu einem "One-Stop-Shop" für den Tankvorgang macht.

Die Erfindung wird nachstehend anhand eines in den beigeschlossenen Zeichnungen dargestellten Ausführungsbeispiels näher erläutert. In den Zeichnungen zeigt:
Fig. 1 ein mit einem erfindungsgemäßen Tanksystem ausgestattetes Niederflur-Fahrzeug in einer teilweisen querschnittlichen Seitenansicht;
Fig. 2 ein Fluidschaltbild des Tanksystems von Fig. 1; und
Fig. 3 eine beispielhafte Ausführungsform des Überdruckventils des Tanksystems von Fig. 1 in einer schematischen Seitenansicht.

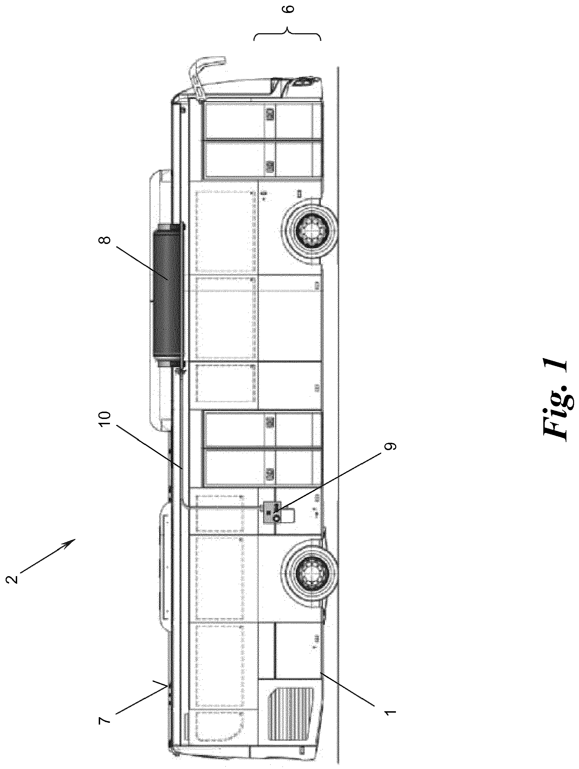

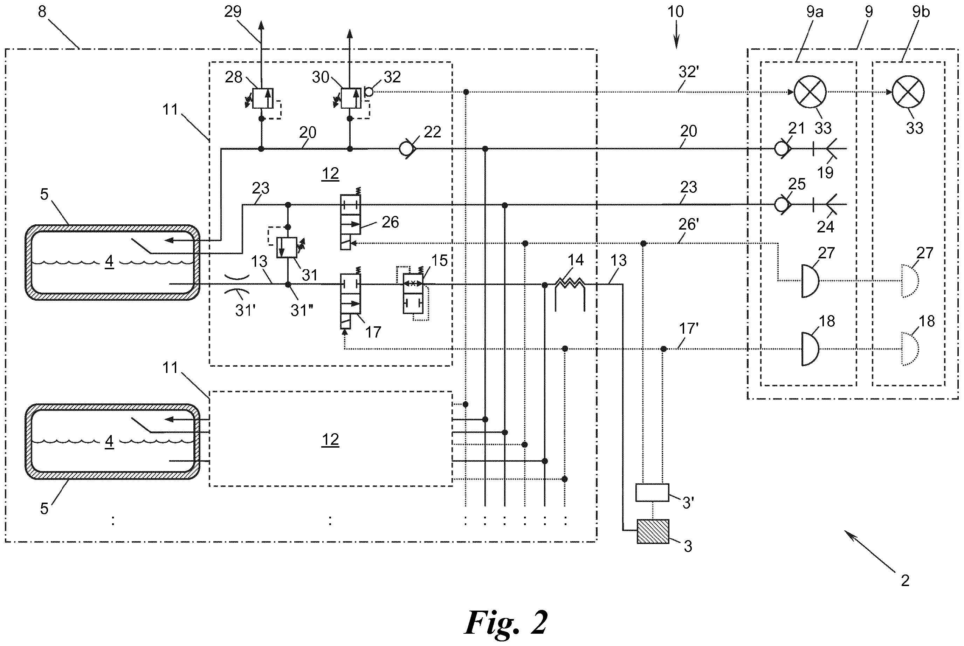

Gemäß Fig. 1 weist ein Niederflur-Fahrzeug 1, beispielsweise ein Tieflader oder ein Bus, ein Kryo-Tanksystem 2 auf, das im Detail in Fig. 2 gezeigt ist. Das Tanksystem 2 bevorratet einen Kraftstoff für einen Verbrennungsmotor 3 des Fahrzeugs 1 mit einer Motorsteuerung 3', und zwar in Form eines Kryofluids 4, das als Zweiphasengemisch aus Kryogas und Kryoflüssigkeit in einem oder mehreren Tanks 5 des Tanksystems 2 vorliegt.

Das Kryofluid 4 ist beispielsweise verflüssigter Wasserstoff oder verflüssigtes Erdgas (LNG). Um kostbaren Bauraum im gut zugänglichen Niederflurbereich 6 des Fahrzeugs 1 einzusparen, ist das Tanksystem 2 aufgeteilt, und zwar in eine am Dach 7 des Fahrzeugs 1 montierbare Speichereinheit 8, welche die großvolumigen Tanks 5 enthält, und eine davon gesonderte Bedieneinheit 9, die im Niederflurbereich 6 des Fahrzeugs 1 montierbar ist, d.h. in jenem Bereich, der für eine im Fahrzeug 1 befindliche oder neben dem Fahrzeug 1 stehende Person leicht erreichbar ist. Über einen Leitungsstrang 10 ist die Bedieneinheit 9 mit der Speichereinheit 8 verbunden.

Die Bedieneinheit 9 kann einteilig ausgeführt sein, wie in Fig. 1 gezeigt, oder in zwei oder mehr Bedienteile 9a, 9b unterteilt sein, wie in Fig. 2 gezeigt. Die Bedieneinheit 9 bzw. ihr erster Bedienteil 9a ist beispielsweise an der Seite des Fahrzeugs 1 montiert, auch bündig in die Seitenwand oder die Unterseite des Fahrzeugs 1 integriert. Im Falle der Zweiteilung kann ihr zweiter Bedieneinteil 9b z.B. im Führerstand des Fahrzeugs 1 montiert werden.

Die Bedieneinheit 9 bzw. ihr Bedienteil 9a enthält in der Art eines "One-Stop-Shop" alle für das Betanken des Fahrzeugs 1 handzuhabenden Komponenten, wie später noch ausführlicher erläutert. Die Speichereinheit 8 enthält demgegenüber die voluminösen Tanks 5 und alle sicherheitskritischen, daran direkt anzuschließenden Komponenten in einem geschützten Bereich bzw. Schutzgehäuse 11 pro Tank 5. Alternativ kann das Schutzgehäuse 11 allen Tanks 5 gemeinsam zugeordnet sein. Jedes Schutzgehäuse 11 bietet mechanischen Schutz für die darin aufgenommene Komponenten, z.B. Aufprallschutz im Falle eines Unfalls, und kann sowohl eine allseitig geschlossene als auch eine bloß gerüst- oder rahmenartige Struktur sein. Das Schutzgehäuse 11 ist entweder gemeinsam mit seinem oder seinen Tank(s) 5 am Dach 7 direkt an diese(n) angrenzend montiert oder umhüllt auch gleich seinen bzw. seine Tank(s) 5.

Jedes Schutzgehäuse 11 bzw. das allen Tanks 5 gemeinsame Schutzgehäuse 11 enthält pro Tank 5 eine Ventilbaugruppe 12, die einerseits direkt am jeweiligen Tank 5 und andererseits - über den Leitungsstrang 10 - an die Bedieneinheit 9 angeschlossen ist. Eine Entnahmeleitung 13 führt vom Bodenraum des Tanks 5 über die Ventilbaugruppe 12 zum Verbrennungsmotor 3 des Fahrzeugs 1, um diesem Kryofluid 4 zur Verbrennung zuzuführen. Die Entnahmeleitungen 13 der Tanks 5 sind dabei zusammengeschaltet und über ein Heizelement 14, z.B. einen Wärmetauscher, geführt, um das Kryofluid 4 vor seiner Einspeisung in den Motor 3 zu verdampfen. Dem Heizelement 14 ist für jeden Tank 5 ein Rohrbruchsicherungsventil 15 vorgeschaltet.

In jeder Ventilbaugruppe 12 ist in die Entnahmeleitung 13 direkt hinter dem Tank 5 ein Absperrventil 17 eingeschaltet, das über eine elektrische Verbindung 17' von einem in der Bedieneinheit 9 angeordneten Notabschalter 18 aus elektrisch betätigbar ist. Die elektrischen Verbindungen 17' aller Ventilbaugruppen 12 können zusammengeschaltet sein oder zu gesonderten Notabschaltern 18 führen. Im Falle einer Zweiteilung der Bedieneinheit 9 kann der bzw. jeder Notabschalter 18 im ersten Bedienteil 9a und/oder oder im zweiten Bedienteil 9b angeordnet werden, d.h. es können auch zwei gleichwirkende Notabschalter 18 an verschiedenen Stellen des Fahrzeugs 1 vorgesehen werden, und sogar auch noch weitere Notabschalter 18 an zusätzlichen Stellen, z.B. an der Unterseite des Fahrzeugs 1.

Zur Errichtung einer ausfallsicheren ("failsafe") Absperrfunktion, die auch bei einem Stromausfall des Fahrzeugs 1 funktioniert, kann jedes Absperrventil 17 optional so ausgeführt sein, dass es im stromlosen Modus sperrt und im stromversorgten Modus öffnet, wobei der Notabschalter 18 im unbetätigten Zustand die Stromversorgung des Absperrventils 17 gewährleistet und im betätigten Zustand, d.h. zur Absperrung der Entnahmeleitung 13, die Stromversorgung des Absperrventils 17 abschaltet.

Jedes Absperrventil 17 kann zusätzlich von der Motorsteuerung 3' aus elektrisch betätigbar sein, um z.B. bei einem von der Motorsteuerung 3' erkannten kritischen Betriebszustand des Motors 3 und/oder Fahrzeugs 1 eine automatische Absperrung der jeweiligen Entnahmeleitung 13 zu bewirken.

Die Bedieneinheit 9 enthält optional auch alle weiteren, zur Betankung der Tanks 5 erforderlichen Komponenten, wie einen Befüllanschluss 19, der über eine im Leitungsstrang 10 geführte Füllleitung 20 zu den Tanks 5 führt, um diese zu befüllen. Die Füllleitungen 20 mehrerer Tanks 5 können dabei zusammengeschaltet sein. Jede Füllleitung 20 kann mit Rückschlagventilen 21, 22 in der Bedieneinheit 9 bzw. Speichereinheit 8 beschaltet sein.

Um das Befüllen der Tanks 5 zu erleichtern, ist jeder Tank 5 mit einer von seinem Kopfraum ausgehenden Entgasungsleitung (Ventleitung) 23 ausgestattet, die zu einem Abgasstrang (Vent Stack) des Fahrzeugs 1 oder einem Entgasungsanschluss 24 in der Bedieneinheit 9 geführt ist. Die Entgasungsleitungen 23 mehrerer Tanks 5 können dabei zusammengeschaltet sein. An den Entgasungsanschluss 24 kann vor bzw. während des Tankens eine Absaugung angeschlossen werden, welche ein Rückschlagventil 25 aufstößt und den Druck im Inneren der Tanks 5 abbaut, um den Anteil an Kryoflüssigkeit im Kryofluid 4 beim Tanken zu maximieren.

Aus Sicherheitsgründen ist jede Entgasungsleitung 23 mit einem Absperrventil 26 versehen, im Weiteren Entgasungsventil genannt, welches in der jeweiligen Ventilbaugruppe 12 angeordnet ist. Das Entgasungsventil 26 ist über eine elektrische Verbindung 26' von einem in der Bedieneinheit 9 angeordneten Entgasungsschalter 27 aus elektrisch betätigbar. Die elektrischen Verbindungen 26' aller Ventilbaugruppen 12 können zusammengeschaltet sein oder zu gesonderten Entgasungsschaltern 27 führen. Im Falle der Zweiteilung der Bedieneinheit 9 wird der Entgasungsschalter 27 in dem den Entgasungsanschluss 24 enthaltenden ersten Bedienteil 9a angeordnet. Optional kann auch der zweite Bedienteil 9b einen gleichwirkenden, zweiten Entgasungsschalter 27 enthalten.

Auch jedes Entgasungsventil 26 kann zusätzlich von der Motorsteuerung 3' aus elektrisch betätigbar sein. Die Motorsteuerung 3' kann z.B. im Fahrbetrieb des Fahrzeugs 1 ein automatisches Schließen aller Entgasungsventile 26 veranlassen, um zu verhindern, dass diese versehentlich offenbleiben.

Ebenfalls aus Sicherheitsgründen sind in jedem Schutzgehäuse 11 zwei Überdruckventile angeordnet, und zwar ein an die Entgasungsleitung 23 angeschaltetes erstes Überdruckventil 28, das bei einem Druck von z.B. 16 bar öffnet und ins Freie oder zu einem Abgasstrang (Vent Stack) 29 des Fahrzeugs 1 führt, und ein an die Füllleitung 20 angeschlossenes zweites Überdruckventil 30, das als Notventil bei einem Druck von z.B. 22 bar öffnet und ins Freie oder zum Abgasstrang 29 führt. Sowohl das erste Überdruckventil 28 als auch das zweite Überdruckventil 30 können jeweils entweder an die Füllleitung 20 oder die Entgasungsleitung 23 angeschaltet sein.

Ein als sog. "Economizer" arbeitendes Überdruckventil 31 zwischen der Entgasungsleitung 23 und der Entnahmeleitung 13 öffnet bei Überschreiten eines Schwellwerts, um dem Motor 3 statt Kryoflüssigkeit direkt Kryogas zuzuführen; eine Drossel 31' reduziert dabei den Druck in der Entnahmeleitung 13 um beispielsweise 1 bar, um bei geöffnetem Überdruckventil 31 an der Einmündung 31" dem Kryogas Vorrang zu geben.

Das zweite Überdruckventil 30 stellt eine kritische "letzte Sicherung" bzw. Hauptsicherung für das Tanksystem 1 dar und ist daher aus Sicherheitsgründen in der Nähe des Tanks 5 im jeweiligen Schutzgehäuse 11 der Speichereinheit 8 angeordnet. Um das Überdruckventil 30 vor bzw. während des Betankens oder auch in regelmäßigen Abständen, z.B. nach längeren Standzeiten des Fahrzeugs 1, in welchen der Druck in den Tanks 5 aufgrund der fortschreitenden Erwärmung des Kryofluids 4 ansteigen kann, auf Auslösung überprüfen zu können, ist das Überdruckventil 30 mit einem seine Überdruckauslösung detektierenden Sensor 32 ausgestattet. Der Sensor 32 steuert über eine elektrische Verbindung 32' eine in der Bedieneinheit 9 angeordnete Anzeigeeinrichtung 33, z.B. eine Warnleuchte. Im Falle von mehreren Tanks 5 können alle Verbindungen 32' zusammen zusammengeschaltet sein oder jeweils zu einer eigenen Anzeigeeinrichtung 33 führen. Jede Anzeigeeinrichtung 33 kann bei Zweiteilung der Bedieneinheit 9 im ersten Bedienteil 9a und/oder im zweiten Bedienteil 9b angeordnet sein.

Es versteht sich, dass die elektrischen Verbindungen 32' - ebenso wie die elektrischen Verbindungen 17' und 26' - sowohl drahtgebundene als auch drahtlose elektrische Verbindungen sein können, d.h. Kabel, Funkstrecken, optische Verbindungen usw.

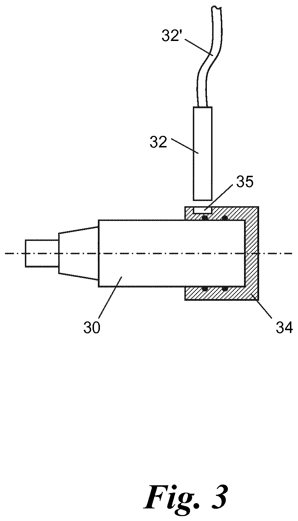

Fig. 3 zeigt eine praktische Ausführungsform des Überdruckventils 30 und seines Sensors 32. Das Überdruckventil 30 weist eine bei seiner Überdruckauslösung absprengende Kappe 34 auf, deren An- bzw. Abwesenheit der Sensor 32 detektiert. Beispielsweise ist der Sensor 32 ein Reed-Kontakt, der von einem in der Kappe 32 gelagerten Magnet 35 im geschlossenen Zustand gehalten wird. Bei Absprengung der Kappe 32 öffnet der Reed-Kontakt, der Sensor 32 spricht an und veranlasst die Anzeigeeinrichtung 33 zur Abgabe eines Warnsignals. Alternativ könnte der Sensor 32 auch auf jede andere in der Technik bekannte Art ausgebildet sein, z.B. als mechanischer Kontakt, der beim Auslösen des Überdruckventils 30 geöffnet oder geschlossen wird, als optischer Sensor, der das Fehlen der Kappe 34 erkennt, als RFID-Lesegerät, welches das Vorhandensein eines in der Schutzkappe 34 integrierten RFID-Tag (Radio Frequency Identification Tag) detektiert, od.dgl.

Die Erfindung ist demgemäß nicht auf die dargestellten Ausführungsformen beschränkt, sondern umfasst alle Varianten, Modifikationen und deren Kombinationen, die in dem Rahmen der angeschlossenen Ansprüche fallen.

## Patentansprüche

1. Tanksystem für ein Niederflur-Fahrzeug, insbesondere einen Bus, mit zumindest einem Tank zur Aufnahme eines Kryofluids und einer am Dach (7) des Fahrzeugs (1) montierbaren Speichereinheit (8) umfassend den zumindest einen Tank (5) und ein ihn umhüllendes oder daran angrenzendes Schutzgehäuse (11),
wobei in dem Schutzgehäuse (11) eine an den Tank (5) angeschlossene Ventilbaugruppe (12) aufgenommen ist, welche ein an eine vom Kopfraum des Tanks (5) ausgehende Füll- oder Entgasungsleitung (20, 23) angeschaltetes Überdruckventil (30) aufweist, **gekennzeichnet durch**
eine im oder am Fahrzeug (1) in Reichweite einer darin befindlichen oder daneben stehenden Person montierbare Bedieneinheit (9), welche über einen Leitungsstrang (10) mit der Speichereinheit (8) verbunden ist,
wobei das Überdruckventil (30) in der Ventilbaugruppe (12) mit einem seine Überdruckauslösung detektierenden Sensor (31) ausgestattet ist, der eine in der Bedieneinheit (9) angeordnete Anzeigeeinrichtung (32) steuert.

2. Tanksystem nach Anspruch 1, **dadurch gekennzeichnet, dass** das Überdruckventil (30) eine bei seiner Überdruckauslösung absprengende Kappe (33) aufweist, wobei der Sensor (31) dafür ausgebildet ist, ein Fehlen der Kappe (33) zu detektieren.

3. Tanksystem nach Anspruch 1 oder 2, **dadurch gekennzeichnet, dass** die Bedieneinheit (9) einen Befüllanschluss (19) darbietet, welcher über eine im Leitungsstrang (10) geführte Füllleitung (20) an den Tank (5) angeschlossen ist.

4. Tanksystem nach Anspruch 3, **dadurch gekennzeichnet, dass** die Bedieneinheit (9) in einen an der Seite des Fahrzeugs (1) montierbaren ersten Bedienteil (9a), der zumindest den Befüllanschluss (19) enthält, und einen davon gesondert im Führerstand des Fahrzeugs (1) montierbaren zweiten Bedienteil (9b), der zumindest die Anzeigeeinrichtung (32) enthält, unterteilt ist.

5. Tanksystem nach Anspruch 4, **dadurch gekennzeichnet, dass** der erste Bedienteil (9a) eine weitere Anzeigeeinrichtung (32) enthält, welche vom Sensor (31) ebenfalls gesteuert ist.

6. Tanksystem nach einem der Ansprüche 1 bis 5, **dadurch gekennzeichnet, dass** die Ventilbaugruppe (12) ein in eine vom Bodenraum des Tanks (5) ausgehende Entnahmeleitung (13) eingeschaltetes Absperrventil (17) aufweist, welches von einem in der Bedieneinheit (9) angeordneten Notabschalter (18) aus elektrisch betätigbar ist.

7. Tanksystem nach Anspruch 6 in Verbindung mit Anspruch 4 oder 5, **dadurch gekennzeichnet, dass** der Notabschalter (18) im zweiten Bedienteil (9b) angeordnet ist.

8. Tanksystem nach Anspruch 7, **dadurch gekennzeichnet, dass** der erste Bedienteil (9a) einen weiteren Notabschalter (18) enthält, von welchem aus das Absperrventil (17) ebenfalls elektrisch betätigbar ist.

9. Tanksystem nach einem der Ansprüche 1 bis 8, **dadurch gekennzeichnet, dass** die Ventilbaugruppe (12) ein in eine vom Kopfraum des Tanks (5) ausgehende Entgasungsleitung (23) eingeschaltetes Entgasungsventil (26) aufweist, welches von einem in der Bedieneinheit (9) angeordneten Entgasungsschalter (27) aus elektrisch betätigbar ist.

10. Tanksystem nach Anspruch 9, **dadurch gekennzeichnet, dass** die Bedieneinheit (9) einen Entgasungsanschluss (24) darbietet, welcher an die im Leitungsstrang (10) geführte Entgasungsleitung (23) angeschlossen ist.

## Claims

1. Tank system for a low-floor vehicle, particularly a bus, comprising at least one tank for receiving of a cryogenic fluid, and a storage unit (8) mountable on the roof (7) of the vehicle (1) and comprising the at least one tank (5) and a protective housing (11) enclosing or abutting the at least one tank (5),
wherein a valve assembly (12) connected to the tank (5) is received in the protective housing (11) and comprises an overpressure valve (30) attached to a filling or degassing line (20, 23) outgoing from an upper portion of the tank (5), **characterised by**
an operating unit (9) mountable in or at the vehicle (1) in reach of a person being inside or standing next to the vehicle (1), which operating unit (9) is connected to the storage unit (8) via a bundle of lines (10),
wherein the overpressure valve (30) in the valve assembly (12) is equipped with a sensor (31) detecting an overpressure release of the overpressure valve (30), which sensor (31) controls an indication device (32) located in the operating unit (9) .

2. Tank system according to claim 1, **characterised in that** the overpressure valve (30) comprises a cap (33) blasting off at the overpressure release of the overpressure valve (30), wherein the sensor (31) is configured to detect an absence of the cap (33).

3. Tank system according to claim 1 or 2, **characterised in that** the operating unit (9) provides a filling port (19) connected to the tank (5) via a filling line (20) contained in the bundle of lines (10).

4. Tank system according to claim 3, **characterised in that** the operating unit (9) is divided into a first operating element (9a) mountable on the side of the vehicle (1) and comprising at least the filling port (19), and a second operating element (9b) separately mountable in the driver's cabin of the vehicle (1) and comprising at least the indication device (32).

5. Tank system according to claim 4, **characterised in that** the first operating element (9a) comprises a further indication device (32) which is also controlled by the sensor (31).

6. Tank system according to any one of the claims 1 to 5, **characterised in that** the valve assembly (12) comprises a shut-off valve (17) interposed in a withdrawal line (13) outgoing from the lower portion of the tank (5), which shut-off valve (17) can be operated electrically by an emergency switch (18) located in the operating unit (9).

7. Tank system according to claim 6 in combination with claim 4 or 5, **characterised in that** the emergency switch (18) is located in the second operating element (9b).

8. Tank system according to claim 7, **characterised in that** the first operating element (9a) comprises a further emergency switch (18) by which the shut-off valve (17) can also be operated electrically.

9. Tank system according to any one of the claims 1 to 8, **characterised in that** the valve assembly (12) comprises a degassing valve (26) interposed in a degassing line (23) outgoing from the upper portion of the tank (5), which degassing valve (26) can be operated electrically by a degassing switch (27) located in the operating unit (9).

10. Tank system according to claim 9, **characterised in that** the operating unit (9) provides a degassing port (24) which is connected to the degassing line (23) contained in the bundle of lines (10).

## Revendications

1. Système de réservoir pour un véhicule à plancher surbaissé, notamment un bus, avec au moins un réservoir pour la réception d'un fluide cryogénique et avec une unité de stockage (8), laquelle pouvant être montée sur un toit (7) du véhicule (1) et comprenant l'au moins un réservoir (5) et un boîtier de protection (11) l'enveloppant ou y étant adjacent,
dans lequel un ensemble de soupapes (12) connectée au réservoir (5) est logé dans le boîtier de protection (11), lequel ensemble de soupapes (12) présente une soupape de surpression (30) connectée à une conduite de remplissage ou de dégazage (20, 23) partant de l'espace supérieur du réservoir (5), **caractérisé par**
une unité de commande (9) pouvant être montée dans ou sur le véhicule (1) à portée d'une personne s'y trouvant ou se tenant à côté, laquelle unité de commande (9) est raccordée avec l'unité de stockage (8) par le biais d'un ensemble de conduites (10),
dans lequel la soupape de surpression (30) dans l'ensemble de soupapes (12) est équipée d'un capteur (31) détectant un déclenchement de surpression de la soupape de surpression (30), capteur (31) qui commande un dispositif d'affichage (32) disposé dans l'unité de commande (9).

2. Système de réservoir selon la revendication 1, **caractérisé en ce que** la soupape de surpression (30) présente un capuchon (33) enlevant lors de son déclenchement de surpression, où le capteur (31) est conçu pour détecter une absence du capuchon (33).

3. Système de réservoir selon la revendication 1 ou 2, **caractérisé en ce que** l'unité de commande (9) présente un raccord de remplissage (19), lequel est en communication avec le réservoir (5) par le biais d'une conduite de remplissage (20) menée dans l'ensemble de conduites (10).

4. Système de réservoir selon la revendication 3, **caractérisé en ce que** l'unité de commande (9) est subdivisée en une première partie de commande (9a) pouvant être montée sur le côté du véhicule (1), laquelle contient au moins le raccord de remplissage (19), et une deuxième partie de commande (9b) pouvant être montée séparément dans la cabine de conducteur du véhicule (1), laquelle deuxième partie de commande (9b) contient au moins un dispositif d'affichage (32).

5. Système de réservoir selon la revendication 4, **caractérisé en ce que** la première partie de commande (9a) contient un autre dispositif d'affichage (32), lequel est également commandé par le capteur (31).

6. Système de réservoir selon l'une des revendications 1 à 5, **caractérisé en ce que** l'ensemble de soupapes (12) présente une soupape d'arrêt (17) branchée dans une conduite de prélèvement (13) partant de l'espace inférieur du réservoir (5), laquelle soupape d'arrêt (17) peut être actionnée électriquement par un interrupteur d'urgence (18) disposé dans l'unité de commande (9).

7. Système de réservoir selon la revendication 6 en combinaison avec la revendication 4 ou 5, **caractérisé en ce que** l'interrupteur d'urgence (18) est disposé dans la deuxième partie de commande (9b).

8. Système de réservoir selon la revendication 7, **caractérisé en ce que** la première partie de commande (9a) contient un autre interrupteur d'urgence (18), à partir duquel la soupape d'arrêt (17) peut également être actionnée électriquement.

9. Système de réservoir selon l'une des revendications 1 à 8, **caractérisé en ce que** l'ensemble de soupapes (12) présente une soupape de dégazage (26) branchée dans une conduite de dégazage (23) partant de l'espace supérieur du réservoir (5), laquelle soupape de dégazage (26) peut être actionnée électriquement par un interrupteur de dégazage (27) disposé dans l'unité de commande (9).

10. Système de réservoir selon la revendication 9, **caractérisé en ce que** l'unité de commande (9) présente un raccord de dégazage (24), lequel est en communication avec la conduite de dégazage (23) menée dans l'ensemble de conduites (10).
